# EUROPEAN PATENT SPECIFICATION

(11) **EP 1 402 364 B1**
(45) Date of publication and mention of the grant of the patent: **08.03.2006**
(21) Application number: 02748762.8
(22) Date of filing: 11.06.2002
(51) Int. Cl.: G06F 9/46

(54) **METHOD AND APPARATUS FOR WIDE-SPREAD DISTRIBUTION OF ELECTRONIC CONTENT IN A PEER TO PEER FASHION**
METHODE UND APPARAT ZUR WEITAUSGEDEHNTEN VERTEILUNG VON ELEKTRONISCHEN INHALTEN IN DER PEER-TO-PEER ART UND WEISE
PROCEDE ET APPAREIL DE DISTRIBUTION ETENDUE DE CONTENU ELECTRONIQUE ENTRE ENTITES HOMOLOGUES

(30) Priority: 25.06.2001 US 888473
(43) Date of publication of application: 31.03.2004
(73) Proprietor: International Business Machines Corporation, Armonk, NY 10504 (US); IBM DEUTSCHLAND GMBH, D-70569 Stuttgart (DE)
(72) Inventor: JONES, Jeffrey, Allen, Round Rock, TX 78664 (US); ROTHERT, Douglas, Scott, Austin, TX 78758 (US)
(74) Representative: Teufel, Fritz
(86) International application number: PCT/EP2002/006374
(87) International publication number: WO 2003/001448

(56) References cited:
- MOJO NATION DOCS: "Technology Overview of Mojo Nation" MOJO NATION, [Online] 14 February 2000 (2000-02-14), XP002177454 Retrieved from the Internet: <URL:http://www.mojonation.net/docs/techni cal_overview.shtml> [retrieved on 2001-09-14]
- RABIE S ET AL: "Management of corporate communication networks in the OSI environment" COUNTDOWN TO THE NEW MILENNIUM. PHOENIX, DEC. 2 - 5, 1991, PROCEEDINGS OF THE GLOBAL TELECOMMUNICATIONS CONFERENCE. (GLOBECOM), NEW YORK, IEEE, US, vol. 3, 2 December 1991 (1991-12-02), pages 1426-1433, XP010042696 ISBN: 0-87942-697-7
- TILLEY S ET AL: "Spreading knowledge about gnutella: a case study in understanding net-centric applications" IEEE, 12 May 2001 (2001-05-12), pages 189-198, XP010541020
- SINGHAL S K ET AL: "InVerse: Designing an interactive universe architecture for scalability and extensibility" HIGH PERFORMANCE DISTRIBUTED COMPUTING, 1997. PROCEEDINGS. THE SIXTH IEEE INTERNATIONAL SYMPOSIUM ON PORTLAND, OR, USA 5-8 AUG. 1997, LOS ALAMITOS, CA, USA,IEEE COMPUT. SOC, US, 5 August 1997 (1997-08-05), pages 61-70, XP010245516 ISBN: 0-8186-8117-9
- WATERS R ET AL: "Design of the Interactive Sharing Transfer Protocol" ENABLING TECHNOLOGIES: INFRASTRUCTURE FOR COLLABORATIVE ENTERPRISES, 1997. PROCEEDINGS., SIXTH IEEE WORKSHOPS ON CAMBRIDGE, MA, USA 18-20 JUNE 1997, LOS ALAMITOS, CA, USA,IEEE COMPUT. SOC, US, 18 June 1997 (1997-06-18), pages 140-147, XP010253315 ISBN: 0-8186-7967-0
- GÜNTHER BENGEL: "Verteilte System - Client-Server-Computing für Studenten und Praktiker (pages 241-256)" 2000 , FRIEDR. VIEWEG & SOHN VERLAGSGESELLSCHAFT , BRAUNSCHWEIG/WIESBADEN XP002254595 ISBN: 3-528-05738-6 page 245, line 38 - line 42 page 249 -page 256, Section 5.2.3

## Description

### BACKGROUND OF THE INVENTION

### 1. Technical Field:

The present invention relates generally to computer network environments, and more specifically to the mass distribution of data.

### 2. Description of Related Art:

Current technology for mass distribution of data over the Internet consists of one or more "master" servers where the content is available, and many more "mirror" sites where the same data is stored. Typically, the master server is overwhelmed very easily, and end users are forced to manually attempt a list of mirror sites. Each of those mirror sites may or may not actually have the updated content because they are typically driven by time-based automation (typically a cron job scheduled at midnight). This distribution scheme is incredibly problematic and wasteful in dealing with the initial wave of interest in specific data.

Therefore, it would be desirable to have a method for seemless peer-to-peer offloading of demands on master servers to other nearby clients which are downloading the same content.

### SUMMARY OF THE INVENTION

The present invention provides a method, program and system for distributing information in a computer network. The invention comprises dividing an electronic file into a plurality of pieces and then downloading a file piece to the first client machine to request that file piece. If a second client machine requests the same file piece, the request is redirected to the first client. The first client then functions as a peer-to-peer server and downloads the requested file piece to the second client.

### BRIEF DESCRIPTION OF THE DRAWINGS

The novel features believed characteristic of the invention are set forth in the appended claims. The invention itself, however, as well as a preferred mode of use, further objectives and advantages thereof, will best be understood by reference to the following detailed description of an illustrative embodiment when read in conjunction with the accompanying drawings, wherein:
**Figure 1** depicts a pictorial representation of a network of data processing systems in which the present invention may be implemented;
**Figure 2** depicts a block diagram of a data processing system that may be implemented as a server in accordance with a preferred embodiment of the present invention;
**Figure 3** depicts a block diagram illustrating a data processing system in which the present invention may be implemented;
**Figure 4** depicts a flowchart illustrating peer-to-peer offloading in accordance with the present invention;
**Figure 5** depicts a flowchart illustrating the circumvention of a down peer-to-peer server in accordance with the present invention; and
**Figure 6** depicts a flowchart illustrating security procedures in peer-to-peer data distribution in accordance with the present invention.

### DETAILED DESCRIPTION OF THE PREFERRED EMBODIMENT

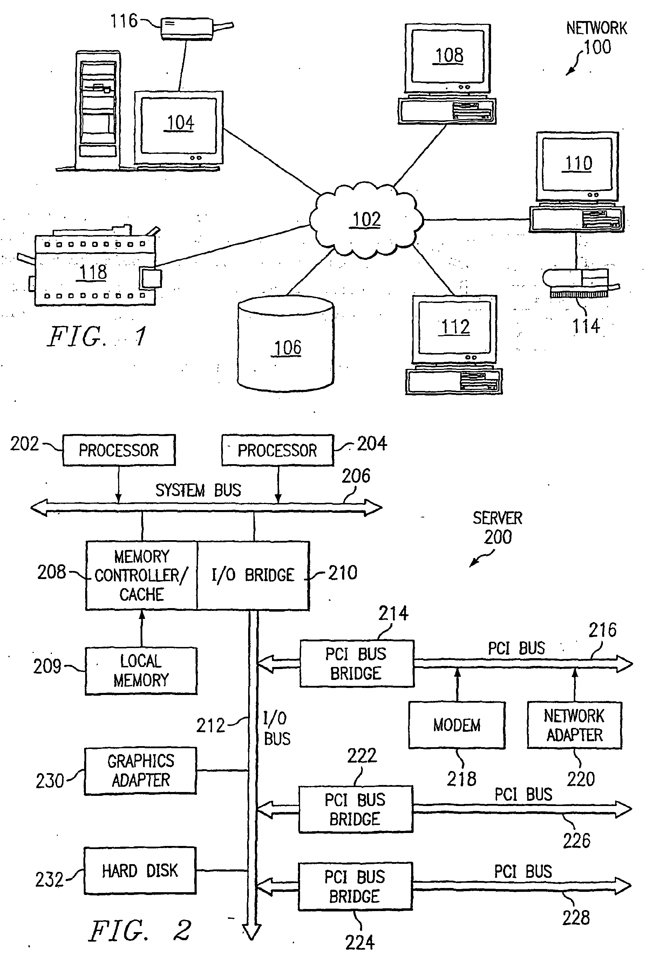

With reference now to the figures, **Figure 1** depicts a pictorial representation of a network of data processing systems in which the present invention may be implemented. Network data processing system **100** is a network of computers in which the present invention may be implemented. Network data processing system **100** contains a network **102,** which is the medium used to provide communications links between various devices and computers connected together within network data processing system **100.** Network **102** may include connections, such as wire, wireless communication links, or fiber optic cables.

In the depicted example, a server **104** is connected to network **102** along with storage unit **106.** In addition, clients **108, 110,** and **112** also are connected to network **102.** These clients **108, 110,** and **112** may be, for example, personal computers or network computers. In the depicted example, server **104** provides data, such as boot files, operating system images, and applications to clients **108-112.** Clients **108, 110,** and **112** are clients to server **104.** Network data processing system **100** may include additional servers, clients, and other devices not shown. In the depicted example, network data processing system **100** is the Internet with network **102** representing a worldwide collection of networks and gateways that use the TCP/IP suite of protocols to communicate with one another. At the heart of the Internet is a backbone of highspeed data communication lines between major nodes or host computers, consisting of thousands of commercial, government, educational and other computer systems that route data and messages. Of course, network data processing system **100** also may be implemented as a number of different types of networks, such as for example, an intranet, a local area network (LAN); or a wide area network (WAN). **Figure 1** is intended as an example, and not as an architectural limitation for the present invention.

Referring to **Figure 2,** a block diagram of a data processing system that may be implemented as a server, such as server **104** in **Figure 1,** is depicted in accordance with a preferred embodiment of the present invention. Data processing system **200** may be a symmetric multiprocessor (SMP) system including a plurality of processors **202** and **204** connected to system bus **206.** Alternatively, a single processor system may be employed. Also connected to system bus **206** is memory controller/cache **208,** which provides an interface to local memory **209.** I/O bus bridge **210** is connected to system bus **206** and provides an interface to I/O bus **212.** Memory controller/cache **208** and I/O bus bridge **210** may be integrated as depicted.

Peripheral component interconnect (PCI) bus bridge 214 connected to I/O bus **212** provides an interface to PCI local bus **216.** A number of modems may be connected to PCI bus **216.** Typical PCI bus implementations will support four PCI expansion slots or add-in connectors. Communications inks to network computers **108-112** in. **Figure 1** may be provided through modem **218** and network adapter **220** connected-to PCI local bus **216** through add-in boards.

Additional PCI bus bridges **222** and **224** provide interfaces for additional PCI buses **226** and **228,** from which additional modems or network adapters may be supported. In this manner, data processing system **200** allows connections to multiple network computers. A memory-mapped graphics adapter **230** and hard disk **232** may also be connected to I/O bus **212** as depicted, either directly or indirectly.

Those of ordinary skill in the art will appreciate that the hardware depicted in **Figure 2** may vary. For example, other peripheral devices, such as optical disk drives and the like, also may be used in addition to or in place of the hardware depicted. The depicted example is not meant to imply architectural limitations with respect to the present invention.

The data processing system depicted in **Figure 2** may be, for example, an IBM RISC/System 6000 system, a product of International Business Machines Corporation in Armonk, New York, running the Advanced Interactive Executive (AIX) operating system.

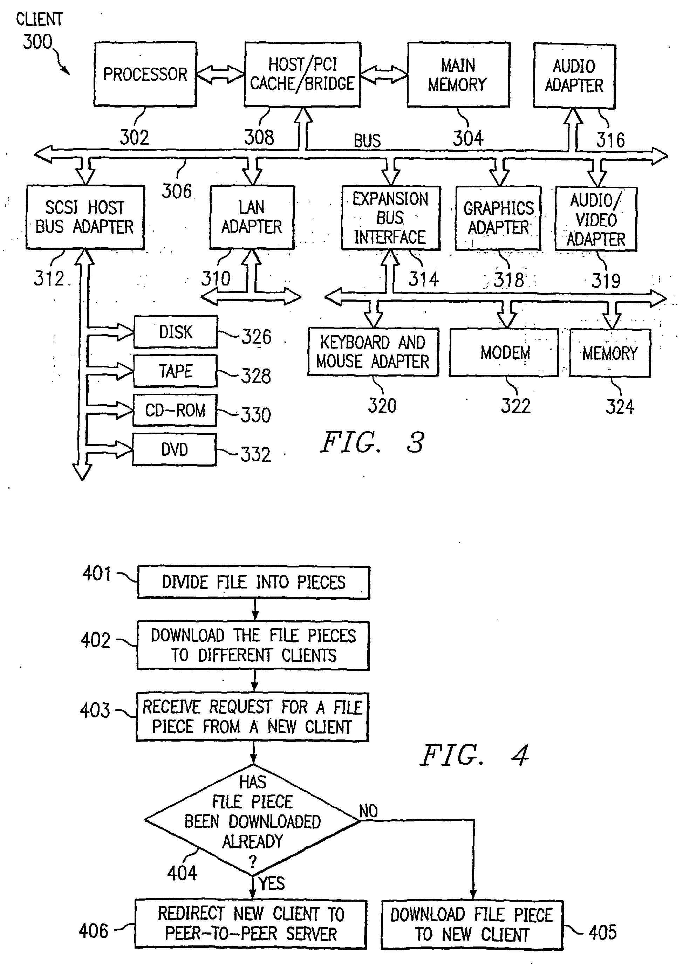

With reference now to **Figure 3,** a block diagram illustrating a data processing system is depicted in which the present invention may be implemented. Data processing system **300** is an example of a client computer. Data processing system **300** employs a peripheral component interconnect (PCI) local bus architecture. Although the depicted example employs a PCI bus, other bus architectures such as Accelerated Graphics Port (AGP) and Industry Standard Architecture (ISA) may be used. Processor **302** and main memory **304** are connected to PCI local bus **306** through PCI bridge **308**. PCI bridge 308 also may include an integrated memory controller and cache memory for processor **302.** Additional connections to PCI local bus **306** may be made through direct component interconnection or through add-in boards. In the depicted example, local area network (LAN) adapter **310,** SCSI host bus adapter **312**, and expansion bus interface **314** are connected to PCT local bus **306** by direct component connection. In contrast, audio adapter **316,** graphics adapter **318,** and audio/video adapter **319** are connected to PCI local bus **306** by add-in boards inserted into expansion slots. Expansion bus interface **314** provides a connection for a keyboard and mouse adapter **320,** modem **322,** and additional memory **324.** Small computer system interface (SCSI) host bus adapter **312** provides a connection for hard disk drive **326**, tape drive **328,** CD-ROM drive **330,** and DVD drive **332**. Typical PCI local bus implementations will support three or four PCI expansion slots or add-in connectors.

An operating system runs on processor **302** and is used to coordinate and provide control of various components within data processing system **300** in **Figure 3.** The operating system may be a commercially available operating system, such as Windows 2000, which is available from Microsoft Corporation. An object oriented programming system such as Java may run in conjunction with the operating system and provide calls to the operating system from Java programs or applications executing on data processing system **300.** "Java" is a trademark of Sun Microsystems, Inc. Instructions for the operating system, the object-oriented operating system, and applications or programs are located on storage devices, such as hard disk drive **326,** and may be loaded into main memory **304** for execution by processor **302**.

Those of ordinary skill in the art will appreciate that the hardware in **Figure 3** may vary depending on the implementation. Other internal hardware or peripheral devices, such as flash ROM (or equivalent nonvolatile memory) or optical disk drives and the like, may be used in addition to or in place of the hardware depicted in **Figure 3.** Also, the processes of the present invention may be applied to a multiprocessor data processing system.

As another example, data processing system **300** may be a stand-alone system configured to be bootable without relying on some type of network communication interface, whether or not data processing system **300** comprises some type of network communication interface. As a further example, data processing system **300** may be a Personal Digital Assistant (PDA) device, which is configured with ROM and/or flash ROM in order to provide nonvolatile memory for storing operating system files and/or user-generated data.

The depicted example in **Figure 3** and above-described examples are not meant to imply architectural limitations. For example, data processing system **300** also may be a notebook computer or hand held computer in addition to taking the form of a PDA. Data processing system **300** also may be a kiosk or a Web appliance.

In prior art approaches for the mass distribution of data, a direct connection is opened from a client to a server (either the master server or a mirror site). All bytes of the requested file are then downloaded in order, from first to last. In some cases, if the connection is broken the client may re-start the download at the point of error. In all cases the download is linear and sequential, and either byte or packet based. Typically, the server addresses a finite number of requests, until it is saturated by bandwidth limits.

The present invention provides a method for employing the seemless use of peer-to-peer technology to offload demands on master servers to other nearby clients which are downloading the same content.

Referring now to **Figure 4,** a flowchart illustrating peer-to-peer offloading is depicted in accordance with the present invention. This process modifies the prior art approach in order to reduce bandwidth consumption across the Internet as a whole. The process begins by breaking a large file into pieces (step **401**). For example, if the file is 650 megabytes (MB), the file might be broken into 650 1-MB pieces. These pieces are then downloaded to different clients (step **402**). In the present example, each client would then have exactly 1/650th of the total file and could rebroadcast its.respective 1-MB piece to a peer client.

When a new client requests a piece of the file (step **403**), the server containing the original complete file determines if the file piece requested by the client has already been downloaded to another client (step **404**). If the requested file piece has not been downloaded, the server fulfills the request and downloads the requested file piece to the new client (step **405**). If the requested file piece has already been downloaded to another client, the server redirects the new requesting client to a peer-to-peer server (step **406**). This redirection could be based on relative network location. For example, all requests for a file piece in Texas would go to a peer-to-peer server in Texas.

The effect of employing the present invention is that as the number of people attempting to access the file increases, the list of peer-to-peer servers mirroring the file (and the potential bandwidth added by those servers) also increases at the same or potentially faster rate. The size and number of pieces into which a file is divided can be dynamically altered based on load. In this way, the greater the load, the smaller the pieces given from the master server and the greater the dependency on peer-to-peer servers.

The following example helps further illustrate the application of the present invention. 650 clients attempt to download the same 650-MB file at the same time from the same master server and wait in queue to be serviced. The first 65 machines connect to the master server and receive a piece of the file and share it with at least ten other client machines. In this way, the master server only has to deal with 65 downloads (assuming none of the peer-to-peer servers share data, otherwise the number will be less), plus the overhead of redirecting the other clients to the right machines. The cost of redirecting the clients (in CPU use and bandwidth) is less than the cost of retransmitting the same file 650 times.

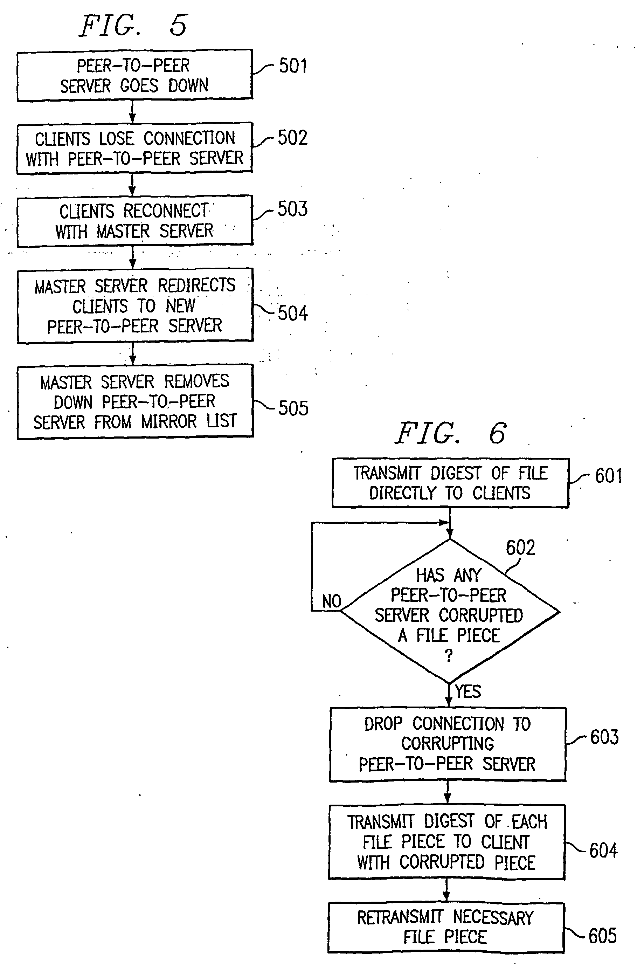

Referring to **Figure 5,** a flowchart illustrating the circumvention of a down peer-to-peer server is depicted in accordance with the present invention. Using the above example, there is the potential that any of the 65 peer-to-peer servers could go down at any time (after all, they are owned by the end users) (step **501**). As a result, clients will lose their connection to the peer-to-peer, server (step **502**) and have to reconnect to the master server (step **503**). The master server will then redirect the clients to another peer-to-peer server, or turn the clients into peer-to-peer servers themselves (step **504**). The master server then removes the down peer-to-peer server from the list of peer-to-peer mirrors (step **505**).

Referring now to **Figure 6,** a flowchart illustrating security procedures in peer-to-peer data distribution is depicted in accordance with the present invention. For security reasons, the master server may transmit a small digest for the file directly to the clients (step 601). This is done so that the clients can accurately tell if any of the peer-to-peer servers have corrupted their respective file pieces (step **602**). A digest is typically a set of verification bytes, such as Cyclic Redundancy Checking (CRC), that are unique to a block of data. As a simplified example, a chunk of data such as "this is my happy string" might have a CRC value of 14. It is a one-way algorithm that works almost uniquely to verify that the data is intact. Continuing the above example, a server/peer might send the CRC first, then "this is my happy string", and the client would compare the CRC for the string and verify that it was transmitted successfully.

In the case of sending an entire file at once, the server/peer only needs to send a single digest for the whole file, because the granularity is on a fine basis. The client either does or does not receive the whole file. In the case of transmitting pieces of a file, a separate digest must be sent to verify each piece (as opposed to a single digest for the whole file). In addition, verifying each file piece is more effective for large files, because the higher the ratio of data to digest (i.e. one digest for the whole file), the less likely one is to get a a unique number, and the larger the possibility of undetected problems.

If one of the peers decides to pass on unwanted data (e.g. a computer virus), the digest of the data will not match the digest from the master server, and the client will know to throw away the bogus data. If a file piece has been corrupted, the receiving client will contact the master server the master server, which will then drop the connection to the corrupting peer-to-peer server (step **603**). In addition, digests for each file piece could be sent from the master server to the client so that the client can determine which piece of the file needs to be retransmitted (step **604**). The master server can then retransmit the necessary file piece (step **605**). It is also suggested that detailed information about the server be sent in the digest of the entire file. In this way, it would be possible to immediately determine the origin of the illegally distributed materials, regardless of how many peer-to-peer servers are involved in the transfer.

It is important to note that while the present invention has been described in the context of a fully functioning data processing system, those of ordinary skill in the art will appreciate that the processes of the present invention are capable of being distributed in the form of a computer readable medium of instructions and a variety of forms and that the present invention applies equally regardless of the particular type of signal bearing media actually used to carry out the distribution. Examples of computer readable media include recordable-type media, such as a floppy disk, a hard disk drive, a RAM, CD-ROMS, DVD-ROMs, and transmission-type media, such as digital and analog communications links, wired or wireless communications links using transmission forms, such as, for example, radio-frequency and light wave transmissions. The computer readable media may take the form of coded formats that are decoded for actual use in a particular data processing system.

The description of the present invention has been presented for purposes of illustration and description, and is not intended to be exhaustive or limited to the invention in the form disclosed. Many modifications and variations will be apparent to those of ordinary skill in the art. The embodiment was chosen and described in order to best explain the principles of the invention, the practical application, and to enable others of ordinary skill in the art to understand the invention for various embodiments with various modifications as are suited to the particular use contemplated.

## Claims

1. A method for distributing information in the form of electronic files in a computer network comprising a server and a plurality of clients, some or all of them being usable as peer-to-peer servers for the parallel download of information, consisting the steps of:
the server dividing (step 401) an electronic file into a plurality of pieces ;
the server receiving (step 403) a request from a client for a file piece;
the server downloading (step 405) the file piece to the client if it is not available (step 404) on a peer-to-peer server;
the' server redirecting (step 406) the request of the client to a peer-to-peer server where the file piece is available (step 404);
the server maintaining a list of peer-to-peer mirrors containing the peer-to-peer servers being connected to the network:
the server receiving an indication (step 503) from a client, that the client is not able to receive (step 502) a file piece from a down peer-to-peer server (step 501);
the server removing the down peer-to-peer server (step 505) from the mirror list;
the server redirecting (step 504) the client to another peer-to-peer server or downloading the file piece to the client.

2. The method according to claim 1, further comprising:
the server sending (step 601) a digest for a file piece to each client which has received that file piece;
the server receiving (step 602) a message from a client, wherein the message indicates that a peer-to-peer server has corrupted a file piece, that is the digest computed by the client for the received file piece does not match the digest received from the server;
the server dropping (step 603) the connection to the peer-to-peer server responsible for corrupting said file piece; and
the server retransmitting (step 605) said file piece to said client, wherein the retransmitted file piece is free of any corrupting content.

3. The method according to claim 1 or 2, further comprising:
the server turning each client it has downloaded a file piece to into a peer-to-peer server.

4. A system for distributing information in the form of electronic files in a computer network comprising a server and a plurality of clients, some or all of them beeing usable as peer-to-peer servers for the parallel download of information, the server comprising:
a dividing component which divides an electronic file into a plurality of pieces;
a receiver which receives a request for a file piece from a client;
a communications component which downloads the requested file piece to the client if it is not available on a peer-to-peer server;
a redirecting component which redirects the request of the client to a peer-to-peer server where the file piece is available;
storage means for storing a list of peer-to-peer mirrors containing the peer-to-peer servers being connected to the network;
a connectivity component removing peer-to-peer servers which are no longer connected to the network from the list of peer-to-peer mirrors.

5. Computer program comprising software code portions adapted to perform all steps of a method according to anyone of the claims 1 to 3 when said program is run on a computer system.

6. The computer program of claim 5 stored on a computer readable medium.

## Patentansprüche

1. Verfahren für das Verteilen von in Form elektronischer Dateien vorliegenden Informationen in einem Computernetzwerk, das einen Server und eine Vielzahl von Clients umfasst, von denen einige oder alle als Peer-to-Peer-Server für den parallelen Download von Informationen nutzbar sind, wobei das verfahren folgende Schritte umfasst:
Aufteilen (Schritt 401) einer elektronischen Datei durch den Server in eine Vielzahl von Dateiteilen;
Empfangen (Schritt 403) einer Anforderung eines Dateiteils von einem Client durch den Server;
Herunterladen (Schritt 405) des Dateiteils auf den Client durch den Server, falls der Dateiteil nicht auf einem Peer-to-Peer-Server zur Verfügung steht ist (Schritt 404);
Umleiten (Schritt 406) der Anforderung des Clients durch den Server auf einen Peer-to-Peer-Server, auf welchem der Dateiteil zur Verfügung steht (Schritt 404);
Pflegen einer Liste von Peer-to-Peer-Spiegeln durch den Server, in welcher die am Netzwerk angeschlossenen Peer-to-Peer-Server enthalten sind;
Empfangen (Schritt 503) einer Meldung von einem Client durch den Server, dass der Client von einem ausgefallenen Peer-to-Peer-Server (Schritt 501) ein Dateiteil nicht empfangen kann (Schritt 502);
Löschen (Schritt 505) des ausgefallenen Peer-to-Peer-Servers aus der Liste der Spiegel durch den Server;
Umleiten des Clients (Schritt 504) auf einen anderen Peer-to-Peer-Server durch den Server oder Herunterladen des Dateiteils auf den Client durch den Server.

2. Verfahren nach Anspruch 1, welches des Weiteren umfasst:
Senden (Schritt 601) eines Auszugs für einen Dateiteil durch den Server an jeden Client, der diesen Dateiteil empfangen hat;
Empfangen (Schritt 602) einer Nachricht von einem Client durch den Server, wobei in der Nachricht mitgeteilt wird, dass ein Peer-to-Peer-Server einen Dateiteil verfälscht hat, das heißt, dass der vom Client berechnete Auszug für den empfangenen Dateiteil nicht dem vom Server empfangenen Auszug entspricht;
Unterbrechen (Schritt 603) der Verbindung zu dem für das Verfälschen der Datei verantwortlichen Peer-to-Peer-Server durch den Server; und
erneutes Übertragen (Schritt 605) des Dateiteils an den Client durch den Server, wobei der erneut übertragene Dateiteil frei von jeglichem verfälschten Inhalt ist.

3. Verfahren nach Anspruch 1 oder 2, welches des weiteren umfasst, dass der Server:
jeden Client, der einen Dateiteil heruntergeladen hat, in einen Peer-to-Peer-Server umwandelt.

4. Vorrichtung für das verteilen von in Form elektronischer Dateien vorliegenden Informationen in einem Computernetzwerk, die einen Server und eine Vielzahl von Clients umfasst, von denen einige oder alle als Peer-to-Peer-Server für den parallelen Download von Informationen nutzbar sind, wobei der Server Folgendes umfasst:
eine Aufteilungskomponente, die eine elektronische Datei in eine Vielzahl von Teilen aufteilt;
einen Empfänger, der eine Anforderung eines Dateiteils von einem Client empfängt;
eine Kommunikationskomponente, welche den angeforderten Dateiteil auf den Client herunterlädt, falls der Dateiteil nicht auf einem Peer-to-Peer-Server zur Verfügung steht;
eine Umleitungskomponente, welche die Anforderung eines Clients auf einen Peer-to-Peer-Server umleitet, auf welchem der Dateiteil zur Verfügung steht;
Speichermittel für das Speichern einer Liste von Peer-to-Peer-Spiegeln, welche die am Netzwerk angeschlossenen Peer-to-Peer-Server enthält;
eine Konnektivitätskomponente, welche Peer-to-Peer-Server, die nicht mehr am Netzwerk angeschlossen sind, aus der Liste der Peer-to-Peer-Spiegel löscht.

5. Computerprogramm, welches Softwarecodeteile umfasst, die so angepasst sind, dass sie, wenn das Programm auf einem. Computersystem läuft, alle Schritte eines Verfahrens nach einem der Ansprüche 1 bis 3 durchführen.

6. Computerprogramm nach Anspruch 5, welches auf einem computerlesbaren Medium gespeichert ist.

## Revendications

1. Un procédé de distribution d'information sous la forme de fichiers électroniques, dans un réseau d'ordinateurs comprenant un serveur et une pluralité de clients, certains ou la totalité d'entre eux étant utilisables en tant que serveurs entre entités homologues pour le déchargement parallèle d'information, consistant les étapes consistant à :
division, par le serveur (étape 401), d'un fichier électronique en une pluralité d'élément ;
réception, par le serveur (étape 403), d'une requête émanant d'un client pour un élément de fichier ;
déchargement, par le serveur (étape 405), de l'élément de fichier au client, s'il n'est pas disponible (étape 404) sur un serveur entre entités homologues ;
redirection, par le serveur (étape 406), de la requête du client au serveur entre entités homologues, là où l'élément de fichier est disponible (étape 404) ;
maintien, par le serveur, d'une liste de miroirs d'entités homologues, comprenant les serveurs entre entités homologues connectés au réseau ;
réception, par le serveur, d'une indication (étape 503), venant d'un client, du fait que le client n'est pas en mesure de recevoir (étape 502) un élément de fichier depuis un serveur entre entités homologues situé en aval (étape 501) ;
élimination, par le serveur, du serveur entre entités homologues aval (étape 505) de la liste miroir ;
redirection, par le serveur (étape 504), du client vers un autre serveur entre entités homologues; ou déchargement de l'élément de fichier au client.

2. Le procédé selon la revendication 1, comprenant en outre :
l'envoi, par le serveur (étape 601), d'un résumé d'un élément de fichier, à chaque client ayant reçu cet élément de fichier ;
réception, par le serveur (étape 602), d'un message venant d'un client, dans lequel un message indique qu'un serveur entre éléments homologues a corrompu un élément de fichier, c'est-à-dire que le résumé, calculé par le client pour l'élément de fichier reçu, ne coïncide pas avec le résumé reçu du serveur ;
coupure, par le serveur (étape 603), de la connexion vers le serveur entre éléments homologues, responsable de la corruption dudit élément de fichier ; et
retransmission, par le serveur (étape 605), dudit élément de fichier audit client, dans lequel ledit élément de fichier retransmis est exempt de tout contenu corrompant.

3. Le procédé selon la revendication 1 ou 2, comprenant en outre :
cummutation du serveur, pour chaque client auquel il a déchargé un élément de fichier, en un serveur entre éléments homologues.

4. Un système de distribution d'information sous la forme de fichiers électroniques dans un réseau d'ordinateurs, comprenant un serveur et une pluralité de clients, certains ou la totalité d'eux étant utilisables en tant que serveurs entre éléments homologues pour le déchargement en parallèle d'informations, le serveur comprenant :
un composant de division, divisant un fichier électronique, en une pluralité d'éléments ;
un récepteur, recevant une requête pour un élément de fichier de la part d'un client ;
un composant de communication, déchargeant l'élément de fichier demandé au client, s'il n'est pas disponible sur un serveur entre éléments homologues;
un composant de redirection, redirigeant la requête du client vers un serveur entre éléments homologues, dans lequel l'élément de fichier est disponible ;
des moyens de stockage pour stocker une liste de miroirs entre éléments homologues, contenant les serveurs entre éléments homologues connectés au réseau ;
un composant de connectivité, supprimant de la liste des miroirs entre éléments homologues les serveurs entre éléments homologues qui ne sont plus connectés au réseau.

5. Programme d'ordinateur comprenant des parties de code logiciel, adaptées pour accomplir la totalité des étapes d'un procédé selon l'une quelconque des revendications 1 à 3, lorsque ledit programme fonctionne sur un système d'ordinateur.

6. Le programme pour ordinateur selon la revendication 5, stocké sur un support lisible par ordinateur.
